# EUROPEAN PATENT APPLICATION

(11) **EP 4 563 659 A1**
(43) Date of publication of application: **04.06.2025**
(21) Application number: 23846576.9
(22) Date of filing: 26.07.2023
(51) Int. Cl.: C08L 77/00, B29B 17/00, C08J 3/20, C08K 7/02, C08K 7/04, C08L 23/00, C08L 29/04, C08L 67/00, C08L 101/00

(54) **RECYCLED POLYAMIDE RESIN COMPOSITION**

(30) Priority: 26.07.2022 JP 2022118505; 04.04.2023 JP 2023060954
(71) Applicant: UBE Corporation, Ube-shi, Yamaguchi 755-8633 (JP)
(72) Inventor: HATTORI, Issei, Ube-shi, Yamaguchi 755-8633 (JP); YAMAKAWA, Kureha, Ube-shi, Yamaguchi 755-8633 (JP); TSUBOI, Kazutoshi, Ube-shi, Yamaguchi 755-8633 (JP); KURATA, Hideyuki, Ube-shi, Yamaguchi 755-8633 (JP)
(74) Representative: Hoffmann Eitle
(86) International application number: PCT/JP2023/027404
(87) International publication number: WO 2024/024846

(57) **Abstract**

The present invention relates to a recycled polyamide resin composition obtained by melt-kneading a polyamide resin (a) or a polyamide resin composition (A) containing the polyamide resin (a) as a main component, a polyamide-based resin waste material (B), and a fibrous reinforcement filler (C), in which the polyamide-based resin waste material (B) includes a polyamide resin (b1) and a thermoplastic resin (b2) other than a polyamide resin; in a case where a total of the polyamide resin (a) and the polyamide resin (b1) is 100 parts by mass, a content of the polyamide resin (b1) is 11.0 parts by mass or more; in a case where a total of the polyamide resin (a) and the polyamide resin (b1) is 100 parts by mass, a content of the thermoplastic resin (b2) other than a polyamide resin is 0.13 parts by mass or more; and 0 to 80.0% by mass of the polyamide resin (a) or the polyamide resin composition (A) containing the polyamide resin (a) as a main component and 5.0 to 70.0% by mass of the fibrous reinforcement filler (C) are included in 100% by mass of the recycled polyamide resin composition. The recycled polyamide resin composition of the present invention can contribute to SDGs (Sustainable Development Goals).

## Description

### Technical Field

The present invention relates to a recycled polyamide resin composition.

### Background Art

In recent years, reduction of plastic waste has been demanded according to enhancement of SDGs (Sustainable Development Goals).

For example, fishing nets, when left as they are in nature, may wrap around living things such as fishes and birds, and/or may serve as microplastics to contaminate the ocean. In addition, fishing nets, even when appropriately disposed, lead to increase of plastic waste.

Fishing nets are often made of compositions mainly containing polyamide resins. Patent Literature 1 discloses a fishing net recycling method for providing a high-quality recycled pellet, the method including cutting, pulverizing, and pelletizing a fishing net.

Patent Literature 2 discloses a recycled polyamide for molding, including a polyamide monofilament waste material fiber and a polyamide resin composition mixed, in which the polyamide resin composition used here is one obtained by mixing a polyamide resin lower in mass average molecular weight than the waste material fiber, and a glass fiber.

Patent Literature 3 discloses stabilization by combining and compounding at least one compound reactive with a carbonyl group and an antioxidant with recycled thermoplastics.

### Citation List

### Patent Literature

[Patent Literature 1] Japanese Patent No. 6935963
[Patent Literature 2] Japanese Patent Laid-Open No. 2004-18614
[Patent Literature 3] Japanese Translation of PCT International Application Publication No. 2022-518047

### Summary of Invention

### Technical Problem

Waste material compositions, even when based on polyamides, usually comprise unintended components including other thermoplastic resins and/or color materials. Physical properties of recycled resin compositions are considered to be varied depending on the make up of such recycled resin compositions, and are affected by the make up of waste material compositions. Physical properties of recycled resin compositions are also considered to be affected by the proportion of waste material compositions contained in such recycled resin compositions. However, neither the make up of waste material compositions, nor the make up of recycled resin compositions have been studied in Patent Literatures 1 to 3.

Polyamide resins and compositions thereof are characterized by being excellent in mechanical characteristics including tensile characteristics, bending characteristics, and impact resistance. There are desired compositional ratios by use of waste material compositions so that mechanical characteristics of polyamide resins and compositions thereof are not impaired or are enhanced.

An object of the present invention is to provide a recycled polyamide resin composition favorable in tensile strength, tensile elastic modulus, bending strength, bending elastic modulus and impact resistance.

### Solution to Problem

The present inventors have found that a recycled polyamide resin composition in which the proportion of a polyamide resin (b1) in a polyamide-based resin waste material (B) in the entire polyamide resin and the proportion of a thermoplastic resin (b2) other than a polyamide resin, as an unintended component included in the polyamide-based resin waste material (B), in the entire polyamide resin are set in specified ranges thus allows mechanical characteristics of a polyamide resin composition containing no waste material to be not impaired or be enhanced, and can be utilized as a recycled polyamide resin composition and thus can contribute to SDGs (Sustainable Development Goals), thereby leading to completion of the present invention.

The present invention provides, for example, the following [1] to [12].
[1] A recycled polyamide resin composition obtained by melt-kneading a polyamide resin (a) or a polyamide resin composition (A) containing the polyamide resin (a) as a main component, a polyamide-based resin waste material (B), and a fibrous reinforcement filler (C), wherein
   the polyamide-based resin waste material (B) comprises a polyamide resin (b1) and a thermoplastic resin (b2) other than a polyamide resin,
   in a case where a total of the polyamide resin (a) and the polyamide resin (b1) is 100 parts by mass, a content of the polyamide resin (b1) is 11.0 parts by mass or more,
   in a case where a total of the polyamide resin (a) and the polyamide resin (b1) is 100 parts by mass, a content of the thermoplastic resin (b2) other than a polyamide resin is 0.13 parts by mass or more, and
   0 to 80.0% by mass of the polyamide resin (a) or the polyamide resin composition (A) containing the polyamide resin (a) as a main component and 5.0 to 70.0% by mass of the fibrous reinforcement filler (C) are comprised in 100% by mass of the recycled polyamide resin composition.
[2] The recycled polyamide resin composition according to [1], wherein more than 0% by mass and 2.00% by mass or less of the thermoplastic resin (b2) other than a polyamide resin is comprised in 100% by mass of the polyamide-based resin waste material (B).
[3] The recycled polyamide resin composition according to [1] or [2], wherein 5.0 to 90.0% by mass of the polyamide-based resin waste material (B) is comprised in 100% by mass of the recycled polyamide resin composition.
[4] The recycled polyamide resin composition according to any of [1] to [3], wherein the thermoplastic resin (b2) other than a polyamide resin is at least one selected from the group consisting of a polyester resin, a polyolefin resin and polyvinyl alcohol.
[5] The recycled polyamide resin composition according to any of [1] to [4], wherein the polyamide resin (a) or the polyamide resin composition (A) containing the polyamide resin (a) as a main component is the polyamide resin composition (A) containing the polyamide resin (a) as a main component and comprises at least one selected from the group consisting of a lubricant and a heat-resistant agent.
[6] The recycled polyamide resin composition according to any of [1] to [5], wherein the polyamide-based resin waste material (B) comprises a color material.
[7] The recycled polyamide resin composition according to any of [1] to [6], wherein the polyamide resin (a) or the polyamide resin (a) in the polyamide resin composition (A) containing the polyamide resin (a) as a main component comprises at least one selected from the group consisting of polyamide 4, polyamide 46, polyamide 410, polyamide 56, polyamide 510, polyamide 512, polyamide 6, polyamide 66, polyamide 610, polyamide 612, polyamide 1010, polyamide 1012, polyamide 11, polyamide 12, polyamide 6/66, polyamide 6/12 and polyamide 6/66/12.
[8] The recycled polyamide resin composition according to any of [1] to [7], wherein the polyamide resin (b1) is an aliphatic homopolyamide resin.
[9] The recycled polyamide resin composition according to any of [1] to [8], wherein the polyamide-based resin waste material (B) is a waste material of monofilaments.
[10] A molded article of the recycled polyamide resin composition according to any of [1] to [9].
[11] A method for producing a recycled polyamide resin composition obtained by melt-kneading a polyamide resin (a) or a polyamide resin composition (A) containing the polyamide resin (a) as a main component, a polyamide-based resin waste material (B), and a fibrous reinforcement filler (C), wherein
   the polyamide-based resin waste material (B) comprises a polyamide resin (b1) and a thermoplastic resin (b2) other than a polyamide resin,
   in a case where a total of the polyamide resin (a) and the polyamide resin (b1) is 100 parts by mass, a content of the polyamide resin (b1) is 11.0 parts by mass or more,
   in a case where a total of the polyamide resin (a) and the polyamide resin (b1) is 100 parts by mass, a content of the thermoplastic resin (b2) other than a polyamide resin is 0.13 parts by mass or more, and
   0 to 80.0% by mass of the polyamide resin (a) or the polyamide resin composition (A) containing the polyamide resin (a) as a main component and 5.0 to 70.0% by mass of the fibrous reinforcement filler (C) are comprised in 100% by mass of the recycled polyamide resin composition.
[12] The method for producing a recycled polyamide resin composition according to [11], comprising
   Step 1 of pulverizing the polyamide-based resin waste material (B),
   optional Step 2 of adding and mixing the polyamide resin (a) or the polyamide resin composition (A) containing the polyamide resin (a) as a main component, to and with the pulverized polyamide-based resin waste material (B) obtained in Step 1, and
   Step 3 of adding and melt-kneading the fibrous reinforcement filler (C) to and with the pulverized product obtained in Step 1 or the mixture obtained in Step 2, to obtain a pellet.

### Advantageous Effect of Invention

The recycled polyamide resin composition of the present invention is favorable in tensile strength, tensile elastic modulus, bending strength, bending elastic modulus and impact resistance.

### Description of Embodiments

The present invention relates to a recycled polyamide resin composition obtained by melt-kneading a polyamide resin (a) or a polyamide resin composition (A) containing the polyamide resin (a) as a main component, a polyamide-based resin waste material (B), and a fibrous reinforcement filler (C), wherein
the polyamide-based resin waste material (B) comprises a polyamide resin (b1) and a thermoplastic resin (b2) other than a polyamide resin,
in a case where a total of the polyamide resin (a) and the polyamide resin (b1) is 100 parts by mass, a content of the polyamide resin (b1) is 11.0 parts by mass or more,
in a case where a total of the polyamide resin (a) and the polyamide resin (b1) is 100 parts by mass, a content of the thermoplastic resin (b2) other than a polyamide resin is 0.13 parts by mass or more, and
0 to 80.0% by mass of the polyamide resin (a) or the polyamide resin composition (A) containing the polyamide resin (a) as a main component and 5.0 to 70.0% by mass of the fibrous reinforcement filler (C) are comprised in 100% by mass of the recycled polyamide resin composition.

### <<Polyamide resin (a) or polyamide resin composition (A) containing polyamide resin (a) as main component>>

The recycled polyamide resin composition preferably comprises the polyamide resin (a) or the polyamide resin composition (A) containing the polyamide resin (a) as a main component.

The polyamide resin (a) is not particularly restricted, and examples thereof include an aliphatic homopolyamide resin and an aliphatic copolymerized polyamide resin.

### (Aliphatic homopolyamide resin (a-1))

The aliphatic homopolyamide resin is a polyamide resin consisting essentially of one aliphatic monomer-derived constituent unit. The aliphatic homopolyamide resin may consist essentially of at least one of one lactam and an aminocarboxylic acid, or may consist essentially of a combination of one diamine and one dicarboxylic acid. Herein, the combination of a diamine and a dicarboxylic acid is regarded as one monomer in the form of a combination of one diamine and one dicarboxylic acid. The "aliphatic" also include alicyclic.

The number of carbon atoms in the lactam is preferably 4 to 12, more preferably 5 to 12. The number of carbon atoms in the aminocarboxylic acid is preferably 4 to 12, more preferably 5 to 12. The number of carbon atoms in the diamine is preferably 2 to 20, more preferably 4 to 12. The number of carbon atoms in the dicarboxylic acid is preferably 2 to 20, more preferably 6 to 12.

Examples of the lactam include ε-caprolactam, enantholactam, undecanelactam, dodecanelactam, 2-pyrrolidone (γ-butyrolactam), 2-piperidone, and laurolactam (ω-lauryllactam). Among these, one selected from the group consisting of ε-caprolactam, undecanelactam and dodecanelactam is preferred from the viewpoint of polymerization productivity.

Examples of the aminocarboxylic acid include 6-aminocaproic acid, 7-aminoheptanoic acid, 9-aminononanoic acid, 11-aminoundecanoic acid, and 12-aminododecanoic acid.

Examples of the diamine include aliphatic diamines such as ethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecanediamine, tetradecanediamine, pentadecanediamine, hexadecanediamine, heptadecanediamine, octadecanediamine, nonadecanediamine, eicosanediamine, 2-methyl-1,8-octanediamine, and 2,2,4/2,4,4-trimethylhexamethylenediamine; and alicyclic diamines such as 1,3-/1,4-cyclohexyldiamine, bis(4-aminocyclohexyl)methane, bis(4-aminocyclohexyl)propane, bis(3-methyl-4-aminocyclohexyl)methane, (3-methyl-4-aminocyclohexyl)propane, 1,3-/1,4-bisaminomethylcyclohexane, 5-amino-2,2,4-trimethyl-1-cyclopentanemethylamine, 5-amino-1,3,3-trimethylcyclohexanemethylamine, bis(aminopropyl)piperazine, bis(aminoethyl)piperazine, and norbornane dimethylenediamine.

Examples of the dicarboxylic acid include aliphatic dicarboxylic acid such as oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid, and eicosanedioic acid; and alicyclic dicarboxylic acids such as 1,3-11,4-cyclohexanedicarboxylic acid, dicyclohexanemethane-4,4'-dicarboxylic acid, and norbornanedicarboxylic acid.

Specific examples of the aliphatic polyamide resin include polybutyrolactam (polyamide 4), polyvalerolactam (polyamide 5), polycaprolactam (polyamide 6), polyenantholactam (polyamide 7), polyundecanelactam (polyamide 11), polylauryllactam (polyamide 12), polyhexamethylene adipamide (polyamide 66), polytetramethylene adipamide (polyamide 46), polytetramethylene azelamide (polyamide 49), polytetramethylene sebacamide (polyamide 410), polytetramethylene dodecamide (polyamide 412), polypentamethylene adipamide (polyamide 56), polypentamethylene azelamide (polyamide 59), polypentamethylene sebacamide (polyamide 510), polypentamethylene dodecamide (polyamide 512), polyhexamethylene azelamide (polyamide 69), polyhexamethylene sebacamide (polyamide 610), polyhexamethylene dodecamide (polyamide 612), polynonamethylene adipamide (polyamide 96), polynonamethylene azelamide (polyamide 99), polynonamethylene sebacamide (polyamide 910), polynonamethylene dodecamide (polyamide 912), polydecamethylene adipamide (polyamide 106), polydecamethylene azelamide (polyamide 109), polydecamethylene decamide (polyamide 1010), polydecamethylene dodecamide (polyamide 1012), polydodecamethylene adipamide (polyamide 126), polydodecamethylene azelamide (polyamide 129), polydodecamethylene sebacamide (polyamide 1210), and polydodecamethylene dodecamide (polyamide 1212). These aliphatic homopolyamide resins can be each used singly or as a mixture of two or more kinds thereof.

Among these aliphatic homopolyamide resins, polyamide 6, polyamide 66, polyamide 610, polyamide 612, polyamide 11, and polyamide 12 are preferred, polyamide 6 and polyamide 66 are more preferred, and polyamide 6 is further preferred from the viewpoint of compatibility with the polyamide-based resin waste material.

The relative viscosity of the aliphatic homopolyamide resin, as measured at 25°C in a solution in which 1 g of the polyamide resin is dissolved in 100 ml of 96% concentrated sulfuric acid, according to JIS K6920-2, is preferably 2.0 or more, more preferably 2.3 to 5.0, further preferably 3.0 to 4.5, from the viewpoint of moldability of the polyamide resin composition.

In a case where the aliphatic homopolyamide resin comprises two or more polyamide resins different in relative viscosity, the relative viscosity in the aliphatic homopolyamide resin is preferably measured according to the above-described content, and in a case where the relative viscosity of each of such polyamide resins and the mixing ratio of such polyamide resins are revealed, the average value calculated by totalizing the values obtained by multiplying the mixing ratio with such each relative viscosity may be defined as the relative viscosity of the aliphatic homopolyamide resin. In the present invention, a measurement value is adopted.

### (Aliphatic copolymerized polyamide resin (a-2))

The aliphatic copolymerized polyamide resin is a polyamide resin consisting essentially of a constituent unit derived from two or more aliphatic monomers. The aliphatic copolymerized polyamide resin is a copolymer of a monomer selected from the group consisting essentially of combination of a diamine and a dicarboxylic acid, a lactam and an aminocarboxylic acid. Herein, the combination of a diamine and a dicarboxylic acid is regarded as one monomer in the form of a combination of one diamine and one dicarboxylic acid.

Examples of the diamine include those which are the same as those exemplified as raw materials of the aliphatic homopolyamide resin.

Examples of the dicarboxylic acid include those which are the same as those exemplified as raw materials of the aliphatic homopolyamide resin.

Examples of the lactam include those which are the same as those exemplified as raw materials of the aliphatic homopolyamide resin.

Examples of the aminocarboxylic acid include those which are the same as those exemplified as raw materials of the aliphatic homopolyamide.

Specific examples of the aliphatic copolymerized polyamide resin include aliphatic copolymerized polyamides such as a caprolactam/hexamethylenediaminoadipic acid copolymer (polyamide 6/66), a caprolactam/hexamethylenediaminoazelaic acid copolymer (polyamide 6/69), a caprolactam/hexamethylenediaminosebacic acid copolymer (polyamide 6/610), a caprolactam/hexamethylenediaminoundecanedicarboxylic acid copolymer (polyamide 6/611), a caprolactam/hexamethylenediaminododecanedicarboxylic acid copolymer (polyamide 6/612), a caprolactam/aminoundecanoic acid copolymer (polyamide 6/11), a caprolactam/lauryllactam copolymer (polyamide 6/12), a caprolactam/hexamethylenediaminoadipic acid/lauryllactam copolymer (polyamide 6/66/12), a caprolactam/hexamethylenediaminoadipic acid/hexamethylenediaminosebacic acid copolymer (polyamide 6/66/610), a caprolactam/hexamethylenediaminoadipic acid/hexamethylenediaminododecanedicarboxylic acid copolymer (polyamide 6/66/612), and a caprolactam/hexamethylenediaminoadipic acid/aminoundecanoic acid copolymer (polyamide 6/66/11). These aliphatic copolymerized polyamides may be each adopted singly or as a mixture of two or more kinds thereof.

Among these aliphatic copolymerized polyamide resins, polyamide 6/66, polyamide 6/12, and polyamide 6/66/12 are preferred, polyamide 6/66 and polyamide 6/66/12 are more preferred, and polyamide 6/66 is further preferred from the viewpoint of compatibility with the polyamide-based resin waste material.

The relative viscosity of the aliphatic copolymerized polyamide resin, as measured at 25°C in a solution in which 1 g of the polyamide resin is dissolved in 100 ml of 96% concentrated sulfuric acid, according to JIS K6920-2, is preferably 2.0 to 5.0, more preferably 2.3 to 5.0, further preferably 3.0 to 4.5, from the viewpoint of moldability of the polyamide resin composition.

In a case where the aliphatic copolymerized polyamide resin comprises two or more polyamide resins different in relative viscosity, the relative viscosity is determined by the same method as described in the section of the aliphatic homopolyamide resin.

The polyamide resin (a) preferably comprises at least one selected from the group consisting of polyamide 4, polyamide 46, polyamide 410, polyamide 56, polyamide 510, polyamide 512, polyamide 6, polyamide 66, polyamide 610, polyamide 612, polyamide 1010, polyamide 1012 polyamide 11, polyamide 12, polyamide 6/66, polyamide 6/12 and polyamide 6/66/12, preferably comprises at least one selected from the group consisting of a polyamide containing an ε-caprolactam-derived constituent unit, a polyamide containing a 6-aminocaproic acid-derived constituent unit, a polyamide containing constituent units derived from monomer of hexamethylenediamine and dicarboxylic acid, polyamide 11 and polyamide 12, more preferably comprises at least one selected from the group consisting of polyamide 6, polyamide 66, polyamide 610, polyamide 612, polyamide 11, polyamide 12, polyamide 6/66, polyamide 6/12 and polyamide 6/66/12, from the viewpoint of compatibility with the polyamide-based resin waste material, and further preferably includes at least one selected from the group consisting of polyamide 6, polyamide 6/66 and polyamide 6/66/12, particularly preferably includes only such resin(s), from the viewpoint of an enhancement in tensile elastic modulus.

The polyamide resin (a) may comprise an aromatic polyamide resin, in addition to the aliphatic homopolyamide resin and the aliphatic copolymerized polyamide resin. The aromatic polyamide resin refers to a polyamide resin comprising at least one aromatic monomer component-derived constituent unit, and may be a homopolymer or a copolymer. The polyamide resin (a) preferably comprises 5% by mass or less, more preferably 1% by mass or less, further preferably 0% by mass of the aromatic polyamide resin. In other words, the polyamide resin (a) further preferably consists essentially of the aliphatic polyamide resin.

### (Production of polyamide resin)

Examples of the production apparatus of the polyamide resin (a) include known polyamide production apparatuses, for example, a batch type reaction oven, a one tank type or multiple tank type continuous reaction apparatus, a tubular continuous reaction apparatus, and a kneading reaction extruder such as a single-screw type kneading extruder or a twin-screw type kneading extruder. The polymerization method can be polymerization in which a known method such as melt polymerization, solution polymerization or solid phase polymerization is used and an operation under an ordinary pressure, a reduced pressure or an increased pressure is repeated. These polymerization methods can be used singly or in appropriate combinations thereof.

The polyamide resin is produced by polymerizing or copolymerizing the polyamide raw material by any known method such as melt polymerization, solution polymerization, and solid phase polymerization. It is preferable for promotion of such polymerization to appropriately add a catalyst or the like at any stage of such polymerization, or at any stage during melt-kneading after such polymerization.

The relative viscosity of the polyamide resin (a), as measured at 25°C in a solution in which 1 g of the polyamide resin is dissolved in 100 ml of 96% concentrated sulfuric acid, according to JIS K6920-2, is preferably 2.0 to 5.0, more preferably 2.3 to 5.0, further preferably 3.0 to 4.5, from the viewpoint of moldability of the polyamide resin composition.

In a case where the polyamide resin (a) comprises two or more polyamide resins different in relative viscosity, the relative viscosity is determined by the same method as described in the section of the aliphatic homopolyamide resin.

The polyamide resin (a) is preferably one in which the same kind of polyamide resins different in relative viscosity are mixed, or is preferably one in which the same kind of polyamide resins different in terminal amino group concentration are mixed.

The terminal amino group concentration in the polyamide resin (a), in terms of the terminal amino group concentration determined by neutralization titration of a solution in which the polyamide resin is dissolved in a mixed solvent of phenol and methanol, is preferably 2.0 × 10⁻⁵ eq/g or more, more preferably in a range of 2.8 × 10⁻⁵ eq/g or more, and preferably 10.0 × 10⁻⁵ eq/g or less, more preferably 9.8 × 10⁻⁵ eq/g or less.

The terminal carboxyl group concentration in the polyamide resin (a), in terms of the terminal carboxyl group concentration determined by neutralization titration of a solution in which the polyamide resin is dissolved in a benzyl alcohol solvent, is preferably 7.5 × 10⁻⁵ eq/g or less, more preferably in a range of 6.5 × 10⁻⁵ eq/g or less, and preferably 2.0 × 10⁻⁵ eq/g or more, more preferably 2.5 × 10⁻⁵ eq/g or more.

In a case where the polyamide resin (a) comprises two or more polyamide resins different in terminal amino group concentration, the terminal amino group concentration in the polyamide resin is preferably measured according to the above-mentioned neutralization titration, and in a case where the terminal amino group concentration of each of such polyamide resins and the mixing ratio of such polyamide resins are revealed, the average value calculated by totalizing the values obtained by multiplying the mixing ratio with such each terminal amino group concentration may be defined as the terminal amino group concentration of the polyamide resin. In the present invention, a value by neutralization titration is adopted.

The same calculation is adopted also in a case where the polyamide resin (a) comprises two or more polyamide resins different in terminal carboxyl group concentration.

The terminal amino group concentration and the terminal carboxyl group concentration can be adjusted within the above ranges by modulation of the molecular weight of the polyamide resin, modulation of the terminal of the polyamide resin with compounds such as dicarboxylic acid, diamine, carboxylic acid, and amine, and the like.

A case where the component (A) is a polyamide resin composition containing the polyamide resin (a) as a main component (hereinafter, also referred to as "polyamide resin composition") is as described below.

Herein, the phrase "polyamide resin (a) as a main component" means the polyamide resin (a) is comprised in the largest amount on a mass basis among all components in the polyamide resin composition, and means that preferably 95.00% by mass or more, more preferably 97.00% by mass or more of the polyamide resin (a) is comprised in 100% by mass of the polyamide resin composition.

The polyamide resin composition may comprise any other thermoplastic resin than a polyamide resin as long as the object of the present invention is not impaired, and such any other thermoplastic resin is preferably not comprised.

The polyamide resin composition may appropriately comprise, as an optional component, a function-imparting agent such as a dye, a pigment, a particulate reinforcement substance, a plasticizer, an antioxidant, a light stabilizer, a heat-resistant agent, a foaming agent, a weather-resistant agent, a crystallization promoter, a crystal nucleating agent, an antistatic agent, a release agent, a lubricant, an impregnating agent, a flame retardant, a flame retardant auxiliary, and/or a colorant. Among these, at least one selected from the group consisting of a lubricant and a heat-resistant agent is preferably comprised. The polyamide resin composition preferably comprises no fibrous reinforcement filler.

### <Heat-resistant agent>

The heat-resistant agent used here can be an organic or inorganic heat-resistant agent depending on the intended object, and these may be used singly or in combinations of two or more kinds thereof. The heat-resistant agent refers to a component which suppresses thermal oxidization or thermal degradation of the polyamide resin, and also encompasses one called antioxidant for the intended object.

### ((Organic heat-resistant agent))

Examples of the organic heat-resistant agent can include a phenol-based compound, a phosphorus-based compound, a sulfur-based compound, and a nitrogen-based compound. These may be used singly or in combinations of two or more kinds thereof.

### (Phenol-based compound)

Examples of the phenol-based compound preferably include a hindered phenol-based compound. Herein, the hindered phenol refers to a compound having a substituent at the ortho-position (hereinafter, also referred to as "o-position") to a hydroxyl group of phenol. The substituent at the o-position is not particularly limited, and examples thereof include an alkyl group, an alkoxy group, an amino group, and halogen. Among these, an alkyl group such as a methyl group, an ethyl group, a n-propyl group, an i-propyl group, a n-butyl group, a sec-butyl group, an i-butyl group, or a t-butyl group is preferred, a bulky i-propyl group, sec-butyl group, i-butyl group, or t-butyl group is more preferred, and a t-butyl group is most preferred. Such a substituent preferably bonds at both of the two o-positions to a hydroxyl group of phenol.

Specific examples of hindered phenol having a t-butyl group at the o-position can include N,N'-hexamethylenebis(3,5-di-t-butyl-4-hydroxy-hydrocinnamamide), pentaerythritol-tetrakis[3-(3,5-di-t-butyl-4-hydroxyphenyl)-propionate, ethylenebis(oxyethylene)bis[3-(5-tert-butyl-4-hydroxy-m-tolyl)propionate], and 3,9-bis[2-[3-(3-tert-butyl-4-hydroxy-5-methylphenyl)propionyloxy]-1,1-dimethylethyl]-2,4,8,10-tetraoxaspiro[5.5]undecane. These may be used singly or in combinations of two or more kinds thereof. Examples of a commercially available product of such a heat-resistant agent include "Irganox 245" "Irganox 1010" (BASF SE) and "Sumilizer GA-80" (Sumitomo Chemical Co., Ltd.). These may be used singly or in combinations of two or more kinds thereof.

### (Phosphorus-based compound)

The phosphorus-based compound is preferably a phosphite compound of hindered phenol or a hypophosphite compound of hindered phenol, more preferably a phosphite compound of hindered phenol having a t-butyl group at the o-position or a hypophosphite compound of hindered phenol having a t-butyl group at the o-position, further preferably a phosphite compound of hindered phenol having a t-butyl group at the o-position. Specific examples of the phosphite compound of hindered phenol having a t-butyl group at the o-position can include tris(2,4-di-t-butylphenyl)phosphite and bis(2,6-di-t-butyl-4-methylphenyl)pentaerythritol diphosphite. Specific examples of the hypophosphite compound of hindered phenol having a t-butyl group at the o-position can include biphenyl containing p,p,p',p'-tetrakis(2,4-di-tert-butylphenoxy)-4,4-biphenyldiphosphine as a main component, a reaction product of phosphorus trichloride and 2,4-di-tert-butylphenol. Examples of a commercially available product of such a heat-resistant agent include "Irgafos 168" (BASF SE) and "hostanox P-EPQ" (Clariant Japan K.K.). These may be used singly or in combinations of two or more kinds thereof.

### (Sulfur-based compound)

Examples of the sulfur-based compound can include distearyl-3,3-thiodipropionate, pentaerythrityl tetrakis(3-laurylthiopropionate) and didodecyl(3,3'-thiodipropionate). These may be used singly or in combinations of two or more kinds thereof.

### (Nitrogen-based compound)

Examples of the nitrogen-based compound can include melamine, melamine cyanurate, benguanamine, dimethylol urea and cyanuric acid. These may be used singly or in combinations of two or more kinds thereof.

The organic heat-resistant agent is preferably a phenol-based compound or a phosphorus-based compound, more preferably a hindered phenol-based compound from the viewpoint of coloration of a material.

### ((Inorganic heat-resistant agent))

The type of the inorganic heat-resistant agent of the heat-resistant agent is a copper compound or a potassium halide, and examples of the copper compound include cuprous iodide, cuprous bromide, cupric bromide, and copper acetate. Cuprous iodide is preferred from the viewpoints of heat resistance and suppression of metal corrosion. Examples of the potassium halide include potassium iodide, potassium bromide, and potassium chloride. Potassium iodide and/or potassium bromide are/is preferred from the viewpoints of heat resistance and long-term stability of the inorganic heat-resistant agent. These may be used singly or in combinations of two or more kinds thereof.

### <Lubricant>

The lubricant refers to one reducing the viscosity of a resin melt and contributing to an enhancement in releasability from a metal surface during molding.

Examples of the lubricant include compounds such as a terminal modified product of polyalkylene glycol, a phosphate compound or a phosphite compound, a higher fatty acid monoester compound, a higher fatty acid or a metal salt thereof, carboxylic acid amide, an ethylenebisamide compound, low-molecular weight polyethylene, magnesium silicate and a substituted benzylidene sorbitol compound. These may be used singly or in combinations of two or more kinds thereof. Among these, a higher fatty acid or a metal salt thereof is preferred.

Examples of the terminal modified product of polyalkylene glycol include a terminal modified product of polyethylene glycol and a terminal modified product of polypropylene glycol.

More specific examples of the phosphate and phosphite include aliphatic phosphates and aliphatic phosphites, such as di(2-ethylhexyl)phosphate, tridecyl phosphite, tris(tridecyl)phosphite, and tristearyl phosphite, and aromatic phosphites such as triphenyl phosphite and diphenyl monodecyl phosphite.

Examples of the higher fatty acid monoester include myristyl myristate, stearyl stearate, behenyl behenate, oleyl oleate, and hexyldecyl myristate.

Examples of the higher fatty acid include myristic acid, palmitic acid, behenic acid, oleic acid, and arachidic acid.

Examples of the metal salt of the higher fatty acid include zinc stearate, lithium stearate, calcium stearate, and aluminum palmitate.

Examples of the carboxylic acid amide include aliphatic monocarboxylic acid amides such as lauric acid amide, palmitic acid amide, oleic acid amide, stearic acid amide, erucic acid amide, behenic acid amide, ricinoleic acid amide, and 12-hydroxystearic acid amide, N-substituted aliphatic monocarboxylic acid amides such as N-lauryllauric acid amide, N-palmitylpalmitic acid amide, N-oleylpalmitic acid amide, N-oleyloleic acid amide, N-oleylstearic acid amide, N-stearylstearic acid amide, N-stearyloleic acid amide, N-stearylerucic acid amide, N-stearyl-12-hydroxystearic acid amide, N-oleyl-12-hydroxystearic acid amide, methylolstearic acid amide, methylolbehenic acid amide, and 12-hydroxystearic acid monoethanolamide, aliphatic carboxylic acid bisamides such as methylenebisstearic acid amide, methylenebislauric acid amide, methylenebis-12-hydroxystearic acid amide, ethylenebiscapric acid amide, ethylenebislauric acid amide, ethylenebisoleic acid amide, ethylenebisstearic acid amide, ethylenebiserucic acid amide, ethylenebisbehenic acid amide, ethylenebisisostearic acid amide, ethylenebis-12-hydroxystearic acid amide, butylenebisstearic acid amide, hexamethylenebisoleic acid amide, hexamethylenebisstearic acid amide, hexamethylenebisbehenic acid amide, hexamethylenebis-12-hydroxystearic acid amide, N,N'-dioleylsebacic acid amide, N,N'-dioleyladipic acid amide, N,N'-distearyladipic acid amide, and N,N'-distearylsebacic acid amide, alicyclic carboxylic acid amides such as N,N'-dicyclohexanecarbonyl-1,4-diaminocyclohexane, 1,4-cyclohexanedicarbamide, 1,4-cyclohexanedicarboxylic acid diaminocyclohexane, 1,2,3,4-butanetetracarboxylic acid tetracyclohexylamide, N,N'-bis(3-hydroxypropyl)-1,4-cubanedicarbamide, N,N'-(1,4-cyclohexanediyl)bis(acetamide), and tris(methylcyclohexyl)propane tricarboxamide, and aromatic carboxylic acid amides such as 1,4-cyclohexanedicarboxylic acid dianilide, 1,4-cyclohexanedicarboxylic acid dibenzylamide, trimesic acid tris(t-butylamide), trimesic acid tricyclohexylamide, trimesic acid tri(2-methylcyclohexylamide), trimesic acid tri(4-cyclohexylamide), 2,6-naphthalene acid dicarboxylic acid dicyclohexylamide, N,N'-dibenzylcyclohexane-1,4-dicarboxamide, N,N'-distearylisophthalic acid amide, N,N'-distearylterephthalic acid amide, m-xylylenebisstearic acid amide, and m-xylylenebis-12-hydroxystearic acid amide.

Examples of the ethylenebisamide compound include ethylenebisstearylamide and ethylene bispalmitylamide.

Examples of the low-molecular weight polyethylene include one having a molecular weight in a range of 500 to 5000, and one having a molecular weight in a range of 1000 to 3000.

Examples of the magnesium silicate include one having an average particle size of 1 to 10 µm.

Examples of the substituted benzylidene sorbitol compound include a substituted benzylidene sorbitol synthesized by dehydration-condensation of sorbitol and substituted benzaldehyde under an acid catalyst. These may be used singly or in combinations of two or more kinds thereof.

An optional additive may be preferably comprised at 0.01 to 5.00% by mass, more preferably 0.05 to 2.50% by mass in 100% by mass of the polyamide resin composition.

The content of the polyamide resin (a) or the polyamide resin composition (A) containing the polyamide resin (a) as a main component in 100% by mass of the recycled polyamide resin composition is 0 to 80.0% by mass, preferably 0 to 65% by mass, preferably 0% by mass or more than 10.0% by mass and 80.0% by mass or less, more preferably 0% by mass or 15.0 to 75.0% by mass, further preferably 0% by mass or 15.0 to 65.0% by mass, particularly preferably 0% by mass or 25.0 to 65.0% by mass. When the polyamide resin (a) or the polyamide resin composition (A) containing the polyamide resin (a) as a main component is comprised in the above range in the recycled polyamide resin composition, a reduction in quality of a molded article produced from the recycled polyamide resin composition is decreased. Here, "0% by mass" means no inclusion.

### <<Polyamide-based resin waste material (B)>>

The recycled polyamide resin composition comprises a polyamide-based resin waste material (B).

The polyamide-based resin waste material (B) comprises a polyamide resin (b1) and a thermoplastic resin (b2) other than a polyamide resin.

### <Polyamide resin (b1)>

The polyamide resin (b1) is not particularly restricted, and examples thereof include an aliphatic homopolyamide resin and an aliphatic copolymerized polyamide resin. Examples thereof include those which are the same as those exemplified with respect to the polyamide resin (a).

The polyamide resin (b1) is preferably an aliphatic homopolyamide resin, more preferably at least one selected from the group consisting of a polyamide containing an ε-caprolactam-derived constituent unit, a polyamide containing a 6-aminocaproic acid-derived constituent unit, and a polyamide containing constituent units derived from monomer of hexamethylenediamine and dicarboxylic acid, further preferably polyamide 6 or polyamide 66, particularly preferably polyamide 6, from the viewpoint of compatibility with the polyamide resin (a) or the polyamide resin composition (A) containing the polyamide resin (a) as a main component.

The polyamide resin (b1) may comprise, in addition to the aliphatic homopolyamide resin and the aliphatic copolymerized polyamide resin, an aromatic polyamide resin. Preferably 5% by mass or less, more preferably 1% by mass or less, further preferably 0% by mass of the aromatic polyamide resin is comprised in the polyamide resin (b1).

The polyamide resin (b1), when having a molecular weight at the same level as that of the polyamide resin (a) as the component (A), is favorable in moldability, and therefore the relative viscosity, as measured at 25°C in a solution in which 1 g of the polyamide resin is dissolved in 100 ml of 96% concentrated sulfuric acid, according to JIS K6920-2, is preferably 2.0 or more, more preferably 2.3 to 5.0, further preferably 2.3 to 4.5.

The content of the polyamide resin (b1) in 100% by mass of the polyamide-based resin waste material (B) is preferably 95.00 to 99.80% by mass, more preferably 97.00 to 99.50% by mass, further preferably 98.00 to 99.60% by mass. When the content is in the above range, functions/characteristics of the polyamide resin are not impaired.

The contents of the polyamide resin (bl) and the thermoplastic resin (b2) other than a polyamide resin, serving as each component in the polyamide-based resin waste material (B), can be analyzed by a known method such as nuclear magnetic resonance analysis, IR (infrared spectroscopy), or liquid chromatography.

### <Thermoplastic resin (b2) other than polyamide resin>

Examples of the thermoplastic resin (b2) other than a polyamide resin include a polyester resin, a polyolefin resin, polyvinyl alcohol, a polystyrene-based resin, a polyether-based resin, a poly(meth)acrylate-based resin, a polycarbonate-based resin, a cellulose-based resin, a polyimide-based resin, a thermoplastic polyurethane-based resin, a polyamide elastomer, a polyurethane elastomer, and a polyester elastomer, and among these, at least one selected from the group consisting of a polyester resin, a polyolefin resin, a polyvinyl alcohol, a polyamide elastomer, a polystyrene-based resin and a poly(meth)acrylate-based resin is preferred, at least one selected from the group consisting of a polyester resin, a polyolefin resin and a polyvinyl alcohol is more preferred, and a polyester resin is further preferred, from the viewpoint of compatibility with the polyamide resin.

Examples of the polyester resin include polybutylene terephthalate (PBT), polyethylene terephthalate (PET), polyethylene isophthalate (PEI), poly(ethylene terephthalate/ethylene isophthalate) copolymer (PET/PEI), polytrimethylene terephthalate (PTT), polycyclohexane dimethylene terephthalate (PCT), polyethylene naphthalate (PEN), polybutylene naphthalate (PBN), polyarylate (PAR), liquid crystal polyester (LCP), polylactic acid (PLA), and polyglycolic acid (PGA). Among these, polyethylene terephthalate (PET) is preferred from the viewpoint of heat resistance.

Examples of the polyolefin resin include high-density polyethylene (HDPE), medium-density polyethylene (MDPE), low-density polyethylene (LDPE), linear low-density polyethylene (LLDPE), ultrahigh-molecular weight polyethylene (UHMWPE), polypropylene (PP), polybutene (PB), a polymethylpentene (TPX), ethylene/propylene copolymer (EPR), and an ethylene/butene copolymer (EBR).

The content of the thermoplastic resin (b2) other than a polyamide resin in 100% by mass of the polyamide-based resin waste material (B) is preferably more than 0% by mass and 2.00% by mass or less, more preferably more than 0% by mass and 1.50% by mass or less. When the thermoplastic resin (b2) other than a polyamide resin is comprised in the above range in the polyamide-based resin waste material (B), characteristics of the thermoplastic resin can be suppressed and characteristics of the polyamide resin are not impaired. Here, "more than 0% by mass" means that a case of no inclusion is excluded.

The polyamide-based resin waste material (B) may appropriately comprise, as an optional component, a function-imparting agent such as a dye, a pigment, a particulate reinforcement substance, a plasticizer, an antioxidant, a light stabilizer, a heat-resistant agent, a foaming agent, a weather-resistant agent, a crystallization promoter, a crystal nucleating agent, an antistatic agent, a release agent, a lubricant, an impregnating agent, a flame retardant, a flame retardant auxiliary, and/or a color material.

Among these, color materials such as dyes, pigments, and colorants are often comprised in fishing nets. Therefore, the polyamide-based resin waste material (B) preferably comprises a color material. Examples of the color material include carbon black.

The content of the color material in 100% by mass of the polyamide-based resin waste material (B) is preferably 1.00% by mass or less, more preferably more than 0% by mass and 1.00% by mass or less. Here, "more than 0% by mass" means that a case of no inclusion is excluded. When the color material in the polyamide-based resin waste material (B) is comprised in the above range, functions/characteristics of the recycled polyamide resin composition are not impaired.

The content of the color material in the polyamide-based resin waste material (B) can be analyzed by a known method such as differential thermal-thermogravimetric simultaneous measurement.

Examples of the polyamide-based resin waste material (B) include polyamide-based resin molded articles satisfying the above compositional ratio, for example, waste materials of monofilaments, such as fishing nets, fishing lines, guts, ropes, toothbrushes, hairbrushes, cosmetic brushes, industrial brushes, fabrics, chain coils, lead wires, hexagonal nets, bird-proof wires, artificial hairs, and mowing cords, preferably include waste materials of fishing nets and fishing lines which can contaminate the marine environment, more preferably include fishing nets.

The content of the polyamide-based resin waste material (B) in 100% by mass of the recycled polyamide resin composition is preferably 5.0 to 90.0% by mass, more preferably 5.0 to 87.5% by mass, further preferably 10.0 to 85.0% by mass, particularly preferably 10.0 to 84.0% by mass, most preferably 10.0 to 60.0% by mass. When the polyamide-based resin waste material (B) is comprised in the above range in the recycled polyamide resin composition, no reduction in quality of a molded article produced from the recycled polyamide resin is caused.

### <Fibrous reinforcement filler (C)>

The recycled polyamide resin composition comprises a fibrous reinforcement filler (C).

The "fibrous form" refers to a form having an average thickness of 1 µm or less and an aspect ratio (ratio of major dimension/minor dimension) of 10 or more. The fibrous reinforcement filler (C) is bent when melt-kneaded with other component. Therefore, the content of the fibrous reinforcement filler (C) in the recycled polyamide resin composition also comprises that of such a fibrous reinforcement filler which is bent and consequently is not applicable to the definition of the "fiber" herein.

The fibrous reinforcement filler may be any of an inorganic filler and an organic filler, and examples thereof include a glass fiber, a carbon fiber, a cellulose fiber, and an aramid fiber. Among these, a glass fiber is preferred from the viewpoint that a molded article is not reduced in flexibility and is enhanced in mechanical characteristics. The fibrous reinforcement filler may be used singly or in combinations of two or more kinds thereof.

The fibrous reinforcement filler may be surface-treated with a surface treatment agent. The fibrous reinforcement filler may also be further sized or granulated with such a surface treatment agent in order to enhance workability. Examples of the surface treatment agent can include various coupling agents such as a silane coupling agent, a titanium-based coupling agent, an aluminum-based coupling agent, and a zirconia-based coupling agent; liquid glass, methylcellulose, carboxymethylcellulose, hydroxyethylcellulose, hydroxypropylcellulose, starch, polyvinyl alcohol, an acrylic resin, an epoxy resin, a phenol resin, polyvinyl acetate, a polyurethane resin, an epoxy-based compound, an isocyanate-based compound, colloidal silica, colloidal alumina, fatty acid, and a surfactant. The surface treatment agent may be used singly or in combinations of two or more kinds thereof.

The surface treatment agent may be applied to the fibrous reinforcement filler and dried to provide a surface treatment or a sizing treatment in advance, or may be added simultaneously together with the fibrous reinforcement filler (C) during preparation of the resin composition.

The fibrous reinforcement filler used as a raw material can be one having an average fiber diameter of 4 to 25 µm. One having an average fiber diameter of 6 to 23 µm is preferred and, for example, one having an average fiber diameter of 10 to 23 µm can be used from the viewpoints of dimension stability and mechanical characteristics of a molded article consisting of the composition.

The fiber length (cut length) of the fibrous reinforcement filler as a raw material is not particularly limited, a chopped strand cut, of 1 mm to 50 mm, can be used, and the fiber length is more preferably 3 mm to 10 mm from the viewpoint of productivity.

The thickness, the major dimension, the minor dimension, the average fiber diameter, and the glass fiber length (cut length) of the fibrous reinforcement filler can be observed with an optical microscope. The average fiber diameter and the glass fiber length (cut length) of the fibrous reinforcement filler as a raw material may be catalog values.

The content of the fibrous reinforcement filler (C) in 100% by mass of the recycled polyamide resin composition is 5.0 to 70.0% by mass, preferably 10.0 to 65.0% by mass, more preferably 15.0 to 62.0% by mass, further preferably 16.0 to 62.0% by mass, particularly preferably 16.0 to 45.0% by mass. When the content of the fibrous reinforcement filler is in the above range, appropriate mechanical strength can be maintained.

### <<Recycled polyamide resin composition>>

The recycled polyamide resin composition is obtained by melt-kneading any polyamide resin (a) or any polyamide resin composition (A) containing the polyamide resin (a) as a main component, polyamide-based resin waste material (B), and fibrous reinforcement filler (C).

The recycled polyamide resin composition is preferably obtained by a production method comprising the following steps:
Step 1 of pulverizing the polyamide-based resin waste material (B),
optional Step 2 of adding and mixing the polyamide resin (a) or the polyamide resin composition (A) containing the polyamide resin (a) as a main component, to and with the pulverized polyamide-based resin waste material (B) obtained in Step 1, and
Step 3 of adding and melt-kneading the fibrous reinforcement filler (C) to and with the pulverized product obtained in Step 1 or the mixture obtained in Step 2, to obtain a pellet.

In addition to these steps, a washing step, a dehydration step, a drying step, and the like of the polyamide-based resin waste material (B) may be comprised.

Step 1 can be omitted in the case of use of a commercially available pellet-like polyamide-based resin waste material (B).

In Step 1, the polyamide-based resin waste material (B) is pulverized.

The pulverization apparatus is not particularly restricted as long as it is a known pulverization apparatus, and examples thereof include a jaw crusher, a gyratory crusher, a cone crusher, an impact crusher, a roll crusher, an autogenous pulverizer, a stamp mill, a grindstone pulverizer, a stone mill, a large-size shredder, mills such as a ring mill, a roll mill, a cutter mill, a hammer mill, a turbo mill, a jet mill, a pin mill, a centrifugal mill, and a chopper mill, a grinding machine, Rotoplex, a pulverizer, and an ultra-rotor. The pulverization may be performed in a wet manner.

In Step 2, the polyamide resin (a) or the polyamide resin composition (A) containing the polyamide resin (a) as a main component is added to and mixed with the pulverized polyamide-based resin waste material (B) obtained in Step 1. The polyamide resin composition (A) is an optional component which may be comprised at 0% by mass in the recycled polyamide resin composition, and thus in the case of 0% by mass of the polyamide resin composition (A), the method for producing the recycled polyamide resin composition does not comprise Step 2.

The mixing apparatus is not particularly restricted as long as it is a known mixing apparatus, and examples thereof include a mixer and a ball mill. The polyamide resin (a) or the polyamide resin composition (A) containing the polyamide resin (a) as a main component may be in a pellet state.

In Step 3, the fibrous reinforcement filler (C) is added and melt-kneaded to and with the pulverized product obtained in Step 1 or the mixture obtained in optional Step 2, and thus a pellet is obtained.

In Step 3, there may be adopted a production method involving adding the entire amount of the fibrous reinforcement filler (C) at one time or a production method involving adding one portion of the fibrous reinforcement filler (C) through a top feed and melt-kneading such one portion with other component and thereafter adding the balance thereof through a side feed and further melt-kneading the resultant. In the latter case, when the total of the fibrous reinforcement filler to be compounded in the recycled polyamide resin composition is 100 parts by mass, the amount of the fibrous reinforcement filler loaded through a top feed : the amount of the fibrous reinforcement filler loaded through a side feed (mass ratio) is preferably 2:98 to 98:2, more preferably 5:95 to 95:5, further preferably 10:90 to 90: 10.

The melt-kneading apparatus is not particularly restricted as long as it is a known melt-kneading apparatus, and examples thereof include a single-screw extruder, a twin-screw extruder, a Banbury mixer, a kneader, and a mixing roll.

For example, in the case of use of a twin-screw extruder, any method such as a method comprising compounding and then melt-kneading all raw materials, a method comprising compounding and then melt-kneading some raw materials and further compounding the rest of raw materials and melt-kneading all raw materials, or a method comprising compounding some raw materials and then mixing the rest of raw materials by a side feeder during melt-kneading of such some raw materials may be used.

The melting temperature is not particularly restricted as long as it is a temperature equal to or more than the melting point of each resin, and is preferably a temperature of 280°C or less from the viewpoints of dispersibility and suppression of decomposition of the raw materials.

In a case where at least one selected from the group consisting of a washing step, a dehydration step and a drying step is comprised, such a step is usually performed before Step 1 or may also be performed after Step 1. In a case where the polyamide resin (a) or the polyamide resin composition (A) containing the polyamide resin (a) as a main component is the polyamide resin composition, a step of producing the polyamide resin composition may be comprised so as to be performed before Step 2. A step of melt-kneading the pulverized polyamide-based resin waste material (B) obtained in Step 1, to make the resin pellet state, may be comprised so as to be performed before Step 2.

Examples of the combination of the polyamide resin (a) and the polyamide resin (b1) in the recycled polyamide resin composition preferably include a combination in which the polyamide resin (a) is polyamide 6 and the polyamide resin (b1) is polyamide 6, and a combination in which the polyamide resin (a) is polyamide 6/66 and the polyamide resin (b1) is polyamide 6, from the viewpoint of tensile characteristics. While the polyamide resin (a) and the polyamide resin (b1) may be polyamide resins which are the same type or may be polyamide resins which are different types, the polyamide resins are preferably polyamide resins which are the same type, from the viewpoint that not only the tensile strength is kept, but also the tensile elastic modulus is enhanced.

In a case where the polyamide resin (a) and the polyamide resin (b1) in the recycled polyamide resin composition are 100 parts by mass, the content of the polyamide resin (b1) (b1 × 100/(a + b1)) is 11.0 parts by mass or more, preferably 12.0 parts by mass or more, more preferably 12.0 to 100 parts by mass, further preferably 13.0 to 100 parts by mass, particularly preferably 13.0 to 75.0 parts by mass or 100 parts by mass, most preferably 13.0 to 70.0 parts by mass or 100 parts by mass. In a case where the total amount of the polyamide resin (a) and the polyamide resin (b1) is 100 parts by mass and the content of the polyamide resin (b1) is in the above range, not only tensile characteristics, bending characteristics and impact resistance are excellent, but also no reduction in quality of a molded article produced from the recycled polyamide resin is achieved.

In a case where the total amount of the polyamide resin (a) and the polyamide resin (b1) in the recycled polyamide resin composition is 100 parts by mass, the content of the thermoplastic resin (b2) other than a polyamide resin (b2 × 1001(a + b1)) is 0.13 parts by mass or more, preferably 0.14 parts by mass or more, more preferably 0.15 parts by mass or more, further preferably 0.15 to 0.80 parts by mass or 1.00 to 1.90 parts by mass, particularly preferably more than 0.15 parts by mass and less than 0.79 parts by mass or 1.00 to 1.40 parts by mass. In a case where the total amount of the polyamide resin (a) and the polyamide resin (b1) is 100 parts by mass and the content of the thermoplastic resin (b2) other than a polyamide resin is in the above range, not only tensile characteristics, bending characteristics and impact resistance are excellent, but also no reduction in quality of a molded article produced from the recycled polyamide resin is achieved.

The recycled polyamide resin composition may appropriately comprise, in addition to the component (A), the component (B) and the component (C), a function-imparting agent such as a dye, a pigment, a particulate reinforcement substance, a plasticizer, an antioxidant, a light stabilizer, a heat-resistant agent, a foaming agent, a weather-resistant agent, a crystallization promoter, a crystal nucleating agent, an antistatic agent, a release agent, a lubricant, an impregnating agent, a flame retardant, a flame retardant auxiliary, and/or a colorant, as an optional component.

Such an optional additive may be preferably comprised at 0.01 to 5.00% by mass, more preferably 0.05 to 2.50% by mass in 100% by mass of the recycled polyamide resin composition.

### [Molded article of recycled polyamide resin composition, and application thereof]

The molded article comprising the recycled polyamide resin composition can be obtained as a molded article having a desired shape by molding the recycled polyamide resin composition. Examples of the molding method include an extrusion method, a blow molding method, an injection molding method, and rotational molding. The recycled polyamide resin composition is favorable in injection moldability, and thus can be more suitably used in an injection-molded article by injection molding.

Examples of an injection-molded article by injection molding, an extruded article by extrusion, a blow-molded article by blow molding, and a rotation-molded article by rotational molding suitably include, but are not particularly limited to, those for various applications, for example, not only automobile components such as spoilers, air intake ducts, intake manifolds, resonators, fuel tanks, gas tanks, hydraulic oil tanks, fuel filler tubes, fuel delivery pipes, and other various hoses/tubes/tanks, and mechanical components such as power tool housings and pipes, but also electrical/electronic components such as tanks, tubes, hoses and films, household/office articles, building material-related components, and components for furniture.

Such a molded article can be suitably used in, for example, a driving component such as a gear or a belt, or a sliding component such as a tire side wall or a belt, in the field of vehicles such as automobiles. Examples of the sliding component can include those for dynamic applications, such as gears, cams, pulleys, bearings, bearing retainers, door checks, timing chain guides, and cable/hose-supporting, guiding tools.

In particular, the molded article is suitably used in an automobile component, a sliding component or an electrical/electronic component.

### Examples

Hereinafter, the present invention is described in more detail with reference to Examples and Comparative Examples, but the present invention is not limited by these Examples.

### Materials used in Examples are as described below.

PA6 in polyamide resin (a) or polyamide resin composition (A) containing polyamide resin (a) as main component: polyamide 6, manufactured by UBE Corporation, relative viscosity 4.0, terminal amino group concentration 3.3 × 10⁻⁵ eq/g
Polyamide-based resin waste material (B): pellet manufactured by Refinverse, Inc. The amount of polyethylene terephthalate was analyzed by nuclear magnetic resonance analysis and the amount of carbon black was analyzed by differential thermal-thermogravimetric simultaneous measurement, and as a result, 98.30% by mass of polyamide 6, 1.10% by mass of polyethylene terephthalate and 0.60% by mass of carbon black were included in 100% by mass of the polyamide-based resin waste material.
Glass fiber: product name "ECS 03 T-249H" (manufactured by Nippon Electric Glass Co., Ltd., diameter 10.5 µm, average fiber length 3.5 mm)

### [Measurement of physical properties]

### <Relative viscosity>

The relative viscosity is a value measured at 25°C in a solution in which 1 g of polyamide is dissolved in 100 ml of 96% concentrated sulfuric acid, according to JIS K6920-2.

### <Terminal amino group concentration>

The concentration was determined by dissolving the polyamide resin in a mixed solvent of phenol and methanol and performing neutralization titration.

Hereinafter, ⊚ means Excellent, ○ means Good, △ means Acceptable, and × means Unacceptable in evaluation of tensile strength and tensile elastic modulus, bending strength and bending elastic modulus, and Charpy impact strength.

### <Tensile strength and tensile elastic modulus>

An A-type test piece was produced according to ISO294-1, and a tensile test was carried out under an atmosphere at 23°C according to ISO527-1,2.

The tensile strength was evaluated according to the following criteria.
⊚: 175.0 MPa or more
O: 150.0 MPa or more and less than 175.0 MPa
△: 125.0 MPa or more and less than 150.0 MPa
×: less than 125.0 MPa

The tensile elastic modulus was evaluated according to the following criteria.
⊚:9.50 GPa or more
○:7.00 GPa or more and less than 9.50 GPa
△:5.00 GPa or more and less than 7.00 GPa
×: less than 5.00 GPa

### <Bending strength and bending elastic modulus>

A B-type test piece was produced according to ISO294-1, and a bending test was carried out under an atmosphere at 23°C according to ISO178.

The bending strength was evaluated according to the following criteria.
⊚: 260.0 MPa or more
○: 200.0 MPa or more and less than 260.0 MPa
Δ: 160.0 MPa or more and less than 200.0 MPa
×: less than 160.0 MPa

The bending elastic modulus was evaluated according to the following criteria.
⊚: 8.50 GPa or more
○: 6.00 GPa or more and less than 8.50 GPa
△: 5.00 GPa or more and less than 6.00 GPa
×: less than 5.00 GPa

### <Charpy impact strength>

A B-type test piece was produced according to ISO294-1, and subjected to V-notch formation according to ISO 179/1eA in post-processing. A Charpy impact test was carried out at a hammer capacity of 1 J under an atmosphere at 23°C.

The Charpy impact strength was evaluated according to the following criteria.
⊚: 9.5 kJ/m² or more
O: 7.0 kJ/m² or more and less than 9.5 kJ/m²
△: 4.0 kJ/m² or more and less than 7.0 kJ/m²
×: less than 4.0 kJ/m²

### [Example 1]

A mixture of the polyamide resin and the waste material was obtained by blending at a compositional ratio shown in Table 1 so that 87.5% by mass of polyamide 6 and 12.5% by mass of the polyamide-based resin waste material were achieved.

The obtained mixture of the polyamide resin and the waste material was used, and melt-kneaded with side feeding of the glass fiber by ZSK32Mc twin-screw kneader manufactured by Coperion GmbH, to produce a recycled polyamide resin composition pellet in which 70% by mass of polyamide 6, 10.0% by mass of the polyamide-based resin waste material and 20.0% by mass of the glass fiber were to be achieved. Next, the resulting pellet was injection-molded at a cylinder temperature of 290°C and a mold temperature of 80°C, to produce each test piece, and various physical properties were evaluated.

### [Examples 2 to 7 and Comparative Example 1]

Each test piece was obtained in the same manner as in Example 1 except that the mixing ratio among polyamide 6, the polyamide-based resin waste material, and the glass fiber in the recycled polyamide resin composition pellet was changed to each compositional ratio shown in Table 1.

### [Table 1]

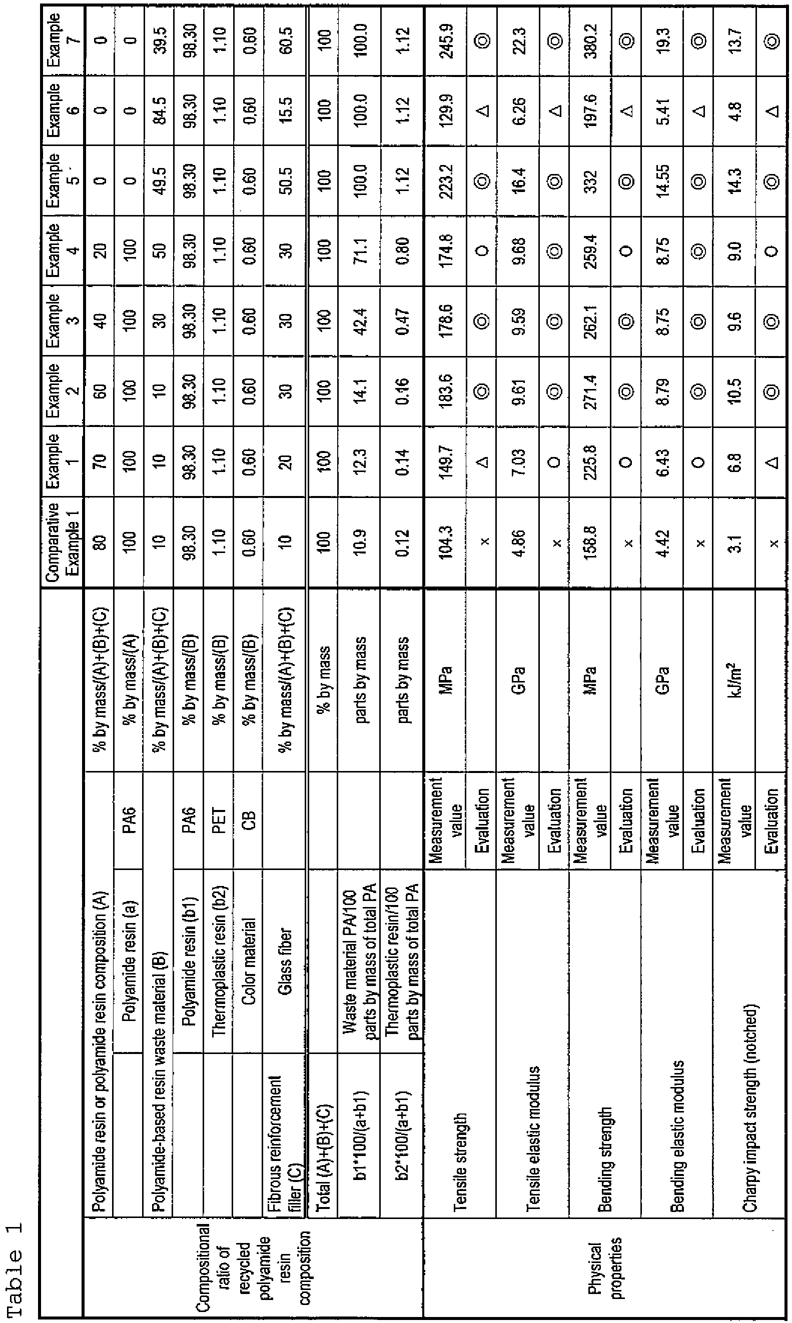

In Examples 1 to 7, all the tensile strength, the tensile elastic modulus, the bending strength, the bending elastic modulus, and the Charpy impact strength were not rated as "×" at all.

In Comparative Example 1 in which, in a case where the total of the polyamide resin (a) and the polyamide resin (b1) was 100 parts by mass, the content of the polyamide resin (b1) was less than 11.0 parts by mass and the content of the thermoplastic resin (b2) other than a polyamide resin was less than 0.13 parts by mass, all such physical properties were rated as "×".

### Industrial Applicability

The recycled polyamide resin composition can be suitably used for production of an injection-molded article by injection molding, an extruded article by extrusion, a blow-molded article by blow molding, or a rotation-molded article by rotational molding.

The present application claims the priorities based on Japanese Patent Application No. 2022-118505 and Japanese Patent Application No. 2023-060954. The entire disclosures of Japanese Patent Application No. 2022-118505 and Japanese Patent Application No. 2023-060954 are herein incorporated by reference.

## Claims

1. A recycled polyamide resin composition obtained by melt-kneading a polyamide resin (a) or a polyamide resin composition (A) containing the polyamide resin (a) as a main component, a polyamide-based resin waste material (B), and a fibrous reinforcement filler (C), wherein
the polyamide-based resin waste material (B) comprises a polyamide resin (b1) and a thermoplastic resin (b2) other than a polyamide resin,
in a case where a total of the polyamide resin (a) and the polyamide resin (b1) is 100 parts by mass, a content of the polyamide resin (b1) is 11.0 parts by mass or more,
in a case where a total of the polyamide resin (a) and the polyamide resin (b1) is 100 parts by mass, a content of the thermoplastic resin (b2) other than a polyamide resin is 0.13 parts by mass or more, and
0 to 80.0% by mass of the polyamide resin (a) or the polyamide resin composition (A) containing the polyamide resin (a) as a main component and 5.0 to 70.0% by mass of the fibrous reinforcement filler (C) are comprised in 100% by mass of the recycled polyamide resin composition.

2. The recycled polyamide resin composition according to claim 1, wherein more than 0% by mass and 2.00% by mass or less of the thermoplastic resin (b2) other than a polyamide resin is comprised in 100% by mass of the polyamide-based resin waste material (B).

3. The recycled polyamide resin composition according to claim 1, wherein 5.0 to 90.0% by mass of the polyamide-based resin waste material (B) is comprised in 100% by mass of the recycled polyamide resin composition.

4. The recycled polyamide resin composition according to claim 1, wherein the thermoplastic resin (b2) other than a polyamide resin is at least one selected from the group consisting of a polyester resin, a polyolefin resin and polyvinyl alcohol.

5. The recycled polyamide resin composition according to claim 1, wherein the polyamide resin (a) or the polyamide resin composition (A) containing the polyamide resin (a) as a main component is the polyamide resin composition (A) containing the polyamide resin (a) as a main component and comprises at least one selected from the group consisting of a lubricant and a heat-resistant agent.

6. The recycled polyamide resin composition according to claim 1, wherein the polyamide-based resin waste material (B) comprises a color material.

7. The recycled polyamide resin composition according to claim 1, wherein the polyamide resin (a) or the polyamide resin (a) in the polyamide resin composition (A) containing the polyamide resin (a) as a main component comprises at least one selected from the group consisting of polyamide 4, polyamide 46, polyamide 410, polyamide 56, polyamide 510, polyamide 512, polyamide 6, polyamide 66, polyamide 610, polyamide 612, polyamide 1010, polyamide 1012, polyamide 11, polyamide 12, polyamide 6/66, polyamide 6/12 and polyamide 6/66/12.

8. The recycled polyamide resin composition according to claim 1, wherein the polyamide resin (b1) is an aliphatic homopolyamide resin.

9. The recycled polyamide resin composition according to claim 1, wherein the polyamide-based resin waste material (B) is a waste material of monofilaments.

10. A molded article of the recycled polyamide resin composition according to any one of claims 1 to 9.

11. A method for producing a recycled polyamide resin composition obtained by melt-kneading a polyamide resin (a) or a polyamide resin composition (A) containing the polyamide resin (a) as a main component, a polyamide-based resin waste material (B), and a fibrous reinforcement filler (C), wherein
the polyamide-based resin waste material (B) comprises a polyamide resin (b1) and a thermoplastic resin (b2) other than a polyamide resin,
in a case where a total of the polyamide resin (a) and the polyamide resin (b1) is 100 parts by mass, a content of the polyamide resin (b1) is 11.0 parts by mass or more,
in a case where a total of the polyamide resin (a) and the polyamide resin (b1) is 100 parts by mass, a content of the thermoplastic resin (b2) other than a polyamide resin is 0.13 parts by mass or more, and
0 to 80.0% by mass of the polyamide resin (a) or the polyamide resin composition (A) containing the polyamide resin (a) as a main component and 5.0 to 70.0% by mass of the fibrous reinforcement filler (C) are comprised in 100% by mass of the recycled polyamide resin composition.

12. The method for producing a recycled polyamide resin composition according to claim 11, comprising
Step 1 of pulverizing the polyamide-based resin waste material (B),
optional Step 2 of adding and mixing the polyamide resin (a) or the polyamide resin composition (A) containing the polyamide resin (a) as a main component, to and with the pulverized polyamide-based resin waste material (B) obtained in Step 1, and
Step 3 of adding and melt-kneading the fibrous reinforcement filler (C) to and with the pulverized product obtained in Step 1 or the mixture obtained in Step 2, to obtain a pellet.
